Europäisches Patentamt

European Patent Office

Office européen des brevets

(11) Numéro de publication : **0 061 367**
**B1**

(12) **FASCICULE DE BREVET EUROPÉEN**

(45) Date de publication du fascicule du brevet :
15.08.84

(51) Int. Cl.³ : **G 02 B   7/26**

(21) Numéro de dépôt : **82400293.5**

(22) Date de dépôt : **18.02.82**

(54) Dispositif de raccordement sur chantier de deux câbles de transmission par fibres optiques.

(30) Priorité : **03.03.81 FR 8104201**

(43) Date de publication de la demande :
**29.09.82 Bulletin 82/39**

(45) Mention de la délivrance du brevet :
**15.08.84 Bulletin 84/33**

(84) Etats contractants désignés :
**BE CH DE GB IT LI NL SE**

(56) Documents cités :
**FR-A- 2 420 777**
**FR-A- 2 447 044**

(73) Titulaire : **LIGNES TELEGRAPHIQUES ET TELEPHO-
NIQUES L.T.T.**
**1, rue Charles Bourseul**
**F-78702 Conflans-Ste-Honorine (FR)**

(72) Inventeur : **Bouvard, André**
**THOMSON-CSF SCPI 173, bld Haussmann**
**F-75360 Paris Cedex 08 (FR)**
Inventeur : **Hulin, Jean-Pierre**
**THOMSON-CSF SCPI 173, Haussmann**
**F-75360 Paris Cedex 08 (FR)**
Inventeur : **de Vecchis, Michel**
**THOMSON-CSF SCPI 173, bld Haussmann**
**F-75360 Paris Cedex 08 (FR)**

(74) Mandataire : **Benoit, Monique et al**
**THOMSON-CSF SCPI 173, Bld Haussmann**
**F-75379 Paris Cedex 08 (FR)**

EP 0 061 367 B1

Jouve, 18, rue St-Denis, 75001 Paris, France

**Description**

La présente invention se rapporte d'une manière générale aux dispositifs de raccordement de deux câbles de transmission comportant chacun, sous une enveloppe de protection, une pluralité d'éléments de câblage, et concerne plus particulièrement un dispositif de raccordement de deux câbles à fibres optiques, destiné à être installé sur chantier, c'est-à-dire par exemple dans une galerie souterraine, où sont effectuées les épissures des éléments de câblage.

On connaît déjà des procédés et des dispositifs permettant de réaliser une épissure de deux éléments de câblage comportant chacun sous une gaine de protection, un support cylindrique diélectrique armé le long de son axe et creusé de rainures, soit longitudinales, soit hélicoïdales à pas simple ou alterné, régulièrement disposées sur son pourtour, et dans chacune desquelles est logée une fibre optique. On se reportera par exemple à la demande de brevet européen n° 36369 au nom de la Demanderesse, concernant : « Procédé et appareillage de raccordement sur chantier de câbles à fibres optiques ». Selon cette demande, le procédé d'épissure de deux éléments de câblage à fibres optiques consiste à effectuer, sur un banc dit d'épissurage, le montage, puis l'alignement, de deux embouts prolongateurs, jouant le rôle de connecteurs, solidaires des deux éléments de câblage, respectivement. Ces opérations de montage et d'alignement sont relativement délicates à effectuer, et mettent généralement à contribution la dextérité de l'opérateur.

Il est également connu, d'après la demande de brevet français n° 2 447 044, d'utiliser un coffret d'épissurage pour abriter les éléments de câblage de deux câbles à fibres optiques une fois raccordés entre eux. Ce coffret, susceptible d'être rendu étanche, est de forme cylindrique et comporte deux flasques terminales reliées entre elles par deux plaques longitudinales. Ces flasques sont chacune pourvues d'une ouverture centrale par laquelle est engagé l'un des deux câbles à raccorder à l'aide d'outils appropriés.

En outre, lorsqu'on doit effectuer, sur le chantier même, le raccordement de deux câbles à fibres optiques, il est nécessaire d'implanter le dispositif de raccordement de manière judicieuse, de façon à permettre à l'opérateur de réaliser les différentes épissures dans les meilleures conditions de travail. De plus, l'implantation du dispositif de raccordement doit contribuer à une réduction de la durée de l'opération de raccordement. D'autre part, les éléments de câblage une fois épissurés, doivent être disposés d'une façon ordonnée à l'intérieur du coffret étanche, de telle sorte qu'en cas de défection de l'un des éléments de câblage, l'opérateur puisse rapidement accéder à cet élément.

La présente invention a pour but de remplir les objectifs précités, en proposant un dispositif de raccordement de deux câbles à fibres optiques, qui est particulièrement bien adapté pour être implanté sur chantier.

A cet effet, l'invention a pour objet un dispositif de raccordement sur chantier de deux câbles de transmission par fibres optiques comportant chacun une pluralité d'éléments de câblage, le dispositif comportant un coffret d'épissurage susceptible d'être rendu étanche, destiné à abriter les éléments de câblage une fois raccordés entre eux, et dont deux faces latérales opposées comportent deux ouvertures dans lesquelles sont destinés à être engagés les deux câbles à raccorder, respectivement, caractérisé en ce que le dispositif comporte :

— une table pourvue d'une échancrure pratiquée sur son pourtour ;

— un banc d'épissurage positionné dans l'échancrure de la table, et sur lequel est monté le coffret, et comportant un rail déplaçable en hauteur et disposé en dégagement du coffret en lui faisant face, et sur lequel sont agencés des outils destinés au raccordement des éléments de câblage ;

— des moyens pour solidariser le banc à la table, de sorte que le banc et la table forment un ensemble unitaire rigide ;

et en ce que le coffret d'épissurage comporte intérieurement pièce cylindrique formant barillet creusée de rainures s'étendant sur toute sa longueur, et dans chacune desquelles est destinée à être logée une longueur déterminée de chaque élément de câblage de chaque câble, et deux pièces formant collerettes, de diamètre externe respectif supérieur à celui du barillet, montées annulairement aux deux extrémités du barillet, respectivement, et creusées chacune d'encoches réparties sur leur pourtour externe, le chemin destiné à être suivi par chaque élément de câblage étant constitué d'une ligne droit à l'intérieur du barillet, et chaque élément de câblage en sortie du barillet étant destiné à être inséré dans une encoche de la collerette disposée le plus près de la sortie immédiate de l'élément de câblage, de sorte que la ligne droit dudit chemin se prolonge par une boucle formant surlongueur se terminant après passage dans l'une des deux collerettes.

On comprend qu'ainsi l'emplacement des outils d'épissurage disposés légèrement à distance du coffret renfermant les éléments de câblage une fois épissurés, permettra à l'opérateur d'effectuer les diverses épissures dans des conditions de travail satisfaisantes. De plus, chaque élément de câblage sera disposé de façon ordonnée à l'intérieur du coffret, et le chemin en boucle suivi par ledit élément permettra de disposer d'une surlongueur de câble, particulièrement efficace pour recommencer une épissure jugée défectueuse.

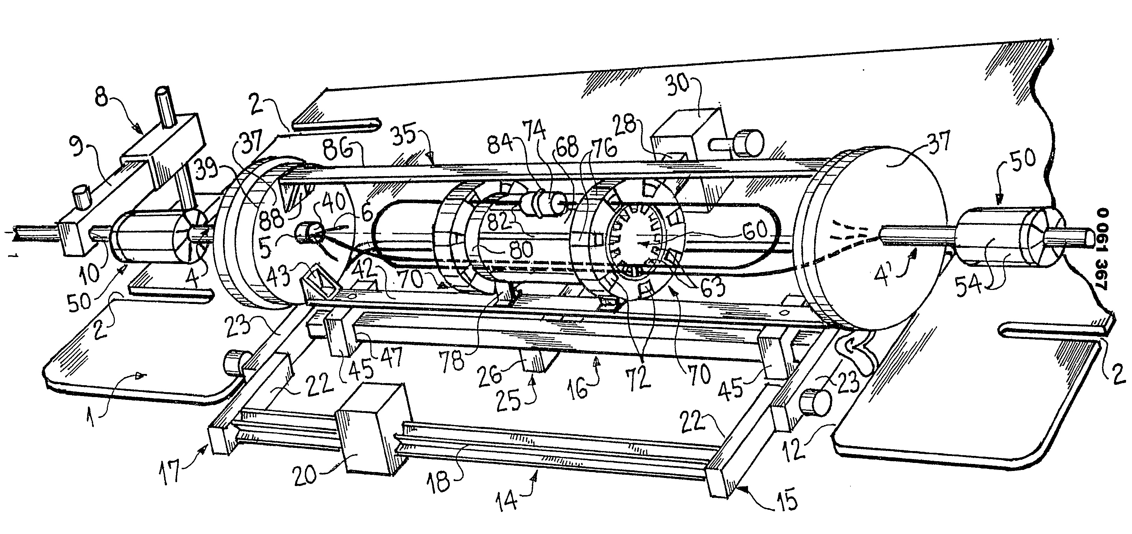

D'autres caractéristiques et avantages de l'invention apparaîtront mieux dans la description détaillée qui suit et se réfère à l'unique dessin annexé, donné uniquement à titre d'exemple et qui est une vue en perspective, avec arrachements, du dispositif de raccordement sur chantier selon l'invention.

Suivant un exemple de réalisation, et en se reportant au dessin annexé, on a représenté en 1 une table rectangulaire destinée à être installée horizontalement, au niveau de quatre lumières 2, sur des pièces métalliques, appelées corbeaux, disposées de part et d'autre d'une galerie souterraine où est effectué le raccordement de deux câbles de transmission par fibres optiques 4 et 4'.

Chaque câble à fibres optiques (4 ; 4') comporte, sous une enveloppe de protection 5, une pluralité d'éléments de câblage 6, par exemple au nombre de sept. La structure de chaque élément de câblage 6 est par exemple du type décrit dans la demande de brevet européen déjà citée.

Les premières opérations du procédé de raccordement consistent à dénuder les extrémités des câbles 4 et 4' sur une longueur prédéterminée, puis à maintenir rigidement en place chaque câble au moyen de deux pièces mécaniques en forme de potences 8 dont une seule a été représentée sur le dessin, fixées de part et d'autre de la table 1. Chaque potence 8 comporte un bras de suspension 9 réglable horizontalement et verticalement, et pourvu à son extrémité d'une ouverture 10 traversée sans jeu par l'enveloppe 5 de chaque câble.

La table 1 comporte, sur l'un de ses côtés, une échancrure 12 en forme de U dans laquelle est positionné un banc 14 dit d'épissurage en forme de cadre rectangulaire dont trois de ses côtés sont constitués par des profilés formant bras (15, 16 et 17) épousant intérieurement la forme en U de l'échancrure 12 de la table, respectivement. Le quatrième côté du banc 14 est constitué par un rail 18 sur lequel sont susceptibles d'être entraînés en translation divers outils, dont un seul a été représenté en 20 sur le dessin, destinés à effectuer successivement les épissures des différents éléments de câblage 6. Pour une description détaillée du procédé d'épissure de deux éléments de câblage, on pourra se reporter à la demande de brevet européen déjà citée. Les différents outils d'épissurage 20 peuvent être protégés par une visière (non représentée) disposée le long du rail 18, permettant ainsi d'éviter la présence, par exemple de poussière, sur ledit rail.

Comme il apparaît sur la figure, chacun des deux bras 15 et 17 est constitué d'une pièce 22 montée pivotante à une extrémité d'une pièce fixe 23 solidaire du bras 16. Le pivotement de chaque pièce 22 permet ainsi à l'opérateur de régler à sa guise la hauteur du rail 18 sur lequel il effectue les diverses épissures des éléments de câblage.

Le banc d'épissurage 14 est rendu solidaire de la table 1 au moyen d'une traverse 25 s'étendant transversalement par rapport au rail 18 et dont une extrémité 26 est fixée sensiblement au milieu du bras 16 du banc et dont l'autre extrémité 28 est montée dans une pièce intermédiaire 30 fixée par tout système approprié sur la table 1, au niveau de son échancrure 12.

Le dispositif de raccordement comporte également un coffret ou pot d'épissurage 35, de forme cylindrique, dont les deux faces terminales comportent deux flasques étanches 37, constituées chacune de deux demi-coquilles fixées l'une à l'autre au moyen d'une bague métallique 39, et pourvues d'une ouverture centrale 40 recevant l'enveloppe 5 de chaque câble (4 ; 4'). Des joints d'étanchéité (non représentés) sont disposés de chaque côté de l'ouverture 40 de chaque flasque 37.

Les deux flasques 37 du coffret d'épissurage 35 sont reliées entre elles par une tringle métallique en forme de plaquette 42, sensiblement de même longueur que le bras 16 du banc d'épissurage, et se terminant par deux pattes 43, dont une seule est visible sur la figure, fixées rigidement sur les bords inférieurs des deux flasques 37, respectivement.

Après avoir procédé à la mise en place des deux flasques 37 et de la tringle 42 formant liaison mécanique rigide, on effectue l'assemblage du coffret 35 avec le banc 14 de lamanière suivante.

La tringle 42 du coffret 35 est montée en appui sur deux supports 45 disposés sur le bras 16 du banc, sensiblement à égale distance de la traverse 25. Plus précisément, chaque support 45 comporte un orifice 47 dans lequel est engagé librement le bras 16, de sorte que chaque support 45 est susceptible de se déplacer par glissement le long dudit bras. Après avoir positionné les deux supports 45, la tringle 42 du coffret d'épissurage 35 est fixée sur les supports 45, au moyen de tout système approprié, constitué par exemple par des vis. Ainsi, le coffret 35 et le banc 14 d'épissurage forment un ensemble unitaire rigide.

Le dispositif de raccordement comporte également deux pièces cylindriques formant magasins 50 montées chacune autour de l'enveloppe 5 de chaque câble (4 ; 4'), c'est-à-dire à l'extérieur du coffret d'épissurage 35. Chaque magasin 50 est par exemple réalisé en deux parties identiques susceptibles d'être verrouillées entre elles par tout système approprié, constitué par exemple par deux ensembles de tiges reliées deux à deux, à l'une de leurs extrémités, par un coin métallique, les deux tiges d'une même paire étant susceptibles de coulisser dans les deux parties de pièces, respectivement. De plus, chaque magasin cylindrique 50 comporte une pluralité de logements 54, par exemple en nombre égal à celui des éléments de câblage 6 d'un même câble (sept dans l'exemple choisi), répartis sur le pourtour du magasin. Chaque logement 54 est recouvert par un capot étanche (non représenté) susceptible d'être entraîné en translation, de façon à assurer l'ouverture et la fermeture du logement correspondant.

Les logements 54 de chaque magasin 50 sont destinés à recevoir successivement des pièces formant embouts prolongateurs, jouant le rôle de connecteurs, montés aux extrémités des différents éléments de câblage 6. Cette opération de montage de connecteurs est réalisée au moyen des outils 20 montés sur le rail 18.

La présence de ces magasins 50 est particulièrement avantageuse, car elle permet à l'opérateur de positionner chaque connecteur une fois monté, dans un abri rendu parfaitement étanche, et de pouvoir travailler sur les éléments de câblage suivants sans subir la moindre gêne de la part des connecteurs déjà montés.

Le coffret d'épissurage 35 comporte intérieurement une pièce cylindrique formant barillet 60 creusée d'une pluralité de rainures 63 s'étendant sur toute sa longueur, en nombre égal à celui de l'ensemble des éléments de câblage 6 des deux câbles, c'est-à-dire quatorze dans l'exemple choisi, et dans chacune desquelles est logé un élément de câblage 6. Ainsi, chaque élément de câblage 6, en sortie de la flasque 37 correspondante du coffret, traverse le barillet 60 en reposant dans l'une de ses rainures 63, sort dudit barillet sur une longueur déterminée, puis l'extrémité de l'élément de câblage est positionnée sur le rail 18 où est effectuée l'épissure avec son élément de câblage homologue.

Le barillet 60 est recouvert d'une gaine ou manchon de protection rigide 68, et deux pièces formant collerettes 70, de diamètre respectif supérieur à celui du barillet 60, sont montées annulairement aux deux extrémités du manchon 68. Chaque collerette 70 est creusée d'une pluralité d'encoches 72 réparties sur son pourtour, et en nombre égal à celui des éléments de câblage 6 d'un même câble, c'est-à-dire sept dans l'exemple choisi.

Après avoir procédé à l'épissure de deux éléments de câblage 6, protégée par une pièce mécanique 74, chaque élément de câblage en sortie du barillet 60 est introduit dans une encoche 72 de la collerette 70 qui est située à l'extrémité du barillet où s'effectue la sortie dudit élément de câblage. Ainsi, le chemin suivi par chaque élément de câblage est constitué d'une ligne droite à l'intérieur du barillet 60 et d'une boucle formant surlongueur se terminant après passage dans une encoche 72 de l'une des deux collerettes 70. On a représenté en 76 des éléments de fermeture des encoches 72 de chaque collerette.

Pour une plus grande clarté du dessin, on a simplement représenté le chemin suivi par deux éléments de câblage 6 une fois leur épissure terminée.

Le barillet 60 et les deux collerettes 70 peuvent être réalisés en une matière élastomère, telle que par exemple celle connue sous la marque déposée Silastène.

L'ensemble constitué par le barillet 60 et les deux collerettes 70 est monté rigidement à l'intérieur du coffret 35 au moyen de deux pattes d'attache 78 fixées d'une part sur la tringle 42, par exemple au moyen de vis, et d'autre part sur deux bagues métalliques 80 montées autour du manchon 68, au niveau des deux collerettes 70. Les deux bagues 80 sont reliées entre elles par une pluralité de barres métalliques 82 réparties annulairement, et en nombre égal à celui des éléments de câblage 6 d'un même câble, c'est-à-dire sept dans l'exemple choisi.

Chaque pièce mécanique 74 de protection d'une épissure, dont une seule est représentée sur le dessin, est attachée sur l'une des barres 82 au moyen par exemple d'une bague plastique 84.

Une fois toutes les pièces mécaniques de protection 74 positionnées à l'intérieur du coffret 35, on procède à la mise en place d'une tringle 86, identique à celle représentée en 42, parallèle à cette dernière, et montée sur le bord supérieur de chaque flasque 37 au moyen d'éléments de fixation, constitués par exemple par des pattes 88 identiques à celles représentées en 43. Cette seconde tringle 86 permet d'assurer une plus grande rigidification du coffret d'épissurage 35.

Le raccordement des deux câbles de transmission 4 et 4' est terminé en désolidarisant le coffret 35 du banc 14, puis en fermant le coffret 35 au moyen d'un manchon cylindrique étanche (non représenté) monté en appui sur les deux flasques 37. Dès lors, le banc d'épissurage 14 et la table 1 peuvent être retirés.

## Revendications

1. Dispositif de raccordement sur chantier de deux câbles de transmission par fibres optiques (4 ; 4') comportant chacun une pluralité d'éléments de câblage (6), le dispositif comportant un coffret d'épissurage (35) susceptible d'être rendu étanche, destiné à abriter les éléments de câblage, une fois raccordés entre eux, et dont deux faces latérales opposées comportent deux ouvertures (40) dans lesquelles sont destinés à être engagés les deux câbles à raccorder, respectivement, caractérisé en ce que le dispositif comporte :

— une table (1) pourvue d'une échancrure (12) pratiquée sur son pourtour ;

— un banc d'épissurage (14) positionné dans l'échancrure de la table, et sur lequel est monté le coffret, et comportant un rail (18) déplaçable en hauteur et diposé en dégagement du coffret (35) en lui faisant face, et sur lequel sont agencés des outils (20) destinés au raccordement des éléments de câblage (6) ;

— des moyens (25, 30) pour solidariser le banc (14) à la table (1), de sorte que le banc et la table forment un ensemble unitaire rigide ;

et en ce que le coffret d'épissurage (35) comporte intérieurement une pièce cylindrique formant barillet (60) creusée de rainures (63) s'étendant sur toute sa longueur, et dans chacune desquelles est destinée à être logée une longueur déterminée de chaque élément de câblage (6) de chaque câble, et deux pièces formant collerettes (70), de diamètre externe respectif supérieur à celui du barillet, montées annulairement aux deux extrémités du barillet (60), respectivement, et creusées chacune d'encoches (72) réparties sur leur pourtour externe, le chemin destiné à être suivi par chaque élément de câblage étant constitué d'une ligne droite à l'intérieur du barillet, et chaque élément de câblage en sortie du barillet étant destiné à être inséré dans une encoche de la collerette disposée le plus près de la sortie immédiate de l'élément de câblage, de sorte que la ligne droite dudit chemin se prolonge par une boucle formant sur longueur se terminant après passage dans l'une des deux collerettes.

2. Dispositif selon la revendication 1, caractérisé en ce que l'échancrure (12) de la table est en forme de U, et en ce que le banc d'épissurage (14) a sensiblement la forme d'un cadre rectangulaire dont trois de ses côtés sont constitués par des bras (15, 16, 17) épousant intérieurement la forme en U de l'échancrure, respectivement, et dont le quatrième côté dudit cadre est constitué par le rail (18) sur lequel sont suceptibles d'être entraînés en translation les outils de raccordement des éléments de câblage.

3. Dispositif selon la revendication 2, caractérisé en ce que les moyens de solidarisation comportent une traverse (25) s'étendant transversalement par rapport au rail (18), et dont une extrémité est fixée sur le bras (16) du banc parallèle au rail, l'autre extrémité de la traverse étant montée dans une pièce intermédiaire (30) fixée sur la table (1) sensiblement au milieu de la branche de l'échancrure en U parallèle au rail.

4. Dispositif selon l'une des revendications 2 ou 3, dans lequel le coffret d'épissurage est de forme cylindrique dont les deux faces latérales terminales comportent deux flasques (37), respectivement, reliées entre elles par au moins une pièce métallique formant tringle (42), caractérisé en ce que la tringle (42) est montée fixement sur une pièce formant support (45) solidaire du bras (16) du banc parallèle au rail, de sorte que le coffret et le banc d'épissurage forment un ensemble unitaire rigide.

5. Dispositif selon la revendication 4, caractérisé en ce que le support (45) comporte un orifice (47) dans lequel est engagé librement le bras (16) du banc parallèle au rail, le support étant susceptible de se déplacer par glissement le long dudit bras (16).

6. Dispositif selon l'une des revendications 4 ou 5, caractérisé en ce que chaque flasque (37) est constituée de deux demi-coquilles fixées l'une à l'autre et réalisées en un matériau étanche.

7. Dispositif selon la revendication 1, caractérisé en ce que le barillet (60) et les deux collerettes (70) sont en une matière élastomère, et en ce que le coffret d'épissurage comporte également un manchon élastique (68) enrobant le barillet (60) de façon à assurer une rigidification de celle-ci.

8. Dispositif selon l'une des revendications 4 à 7, caractérisé en ce que le coffret d'épissurage (35) comporte également des pattes (78) d'attache du barillet (60) sur la tringle (42), ces pattes étant rendues solidaires de deux bagues métalliques (80) montées sur le barillet et reliées entre elles par des barres métalliques (82) sur chacune desquelles est destinée à être fixée une pièce mécanique (74) protégeant l'épissure des éléments de câblage une fois terminée.

9. Dispositif selon l'une des revendications précédentes, caractérisé en ce qu'un connecteur est destiné à être monté à une extrémité de chaque élément de câblage (6), et en ce que le dispositif comporte en outre deux pièces formant magasins (50) montées annulairement sur les deux parties de câble situées à l'extérieur du coffret d'épissurage (35), respectivement, et comprenant chacune des logements étanches (54) pratiqués sur leur pourtour et dans lesquels sont destinés à être successivement positionnés les connecteurs une fois montés.

10. Dispositif selon la revendication 9, caractérisé en ce que chaque magasin (50) est réalisé en deux parties identiques déconnectables l'une de l'autre, et en ce que chaque magasin comporte des moyens pour verrouiller les deux parties entre elles.

11. Dispositif selon l'une des revendications précédentes, caractérisé en ce qu'il comporte en outre deux pièces mécaniques en forme de potences (8), fixées sur la table (1) et comportant chacune un bras de suspension (9) pourvu d'une ouverture (10) dans laquelle est destinée à être engagée sans jeu la partie de câble située à l'extérieur du coffret d'épissurage (35), assurant ainsi un maintien rigide des deux câbles à raccorder.

**Claims**

1. Device for connecting, in a yard, two cables for transmission through optical fibers (4 ; 4') each comprising a plurality of cable members (6), the device comprising a splicing box (35) susceptible to be tightened and adapted to house the cable members once they are interconnected, and two lateral opposed faces of which comprise two openings (40) wherein two cables to be connected are to be respectively engaged, characterized in that the device comprises :
— a table (1) having an indentation (12) formed on its periphery ;
— a splicing bench (14) positioned within the indentation of the table and whereupon the box is mounted, and comprising a rail (18) which is movable in height and removed from the box (35) while facing the same, and on which tools (20) for connecting the cable members (6) are arranged ;
— means (25, 30) for interconnecting the bench (14) and the table (1) in such a manner that the bench and the table form a rigid unit ;
and in that the splicing box (35) comprises inside there of a cylindrical member forming a barrel (60) having hollow grooves (63) extending along its entire length and in each of which a determined length of each cable member (6) of each cable is intended to be received, and two members forming collars (70) and each having an outer diameter exceeding that of the barrel, and mounted in angular manner at the two ends of the barrel (60) respectively, and being each provided with notches (72) distributed on its periphery, the path to be followed by each cable member being formed of a straight line inside the barrel, and each cable member at the outlet of the barrel being intended to be inserted in one notch of the collar located nearest the immediate exit of the cable member, in such a manner that the straight line of said path is prolonged by a loop forming an excess length and ending after passing through one of the two collars.

2. Device according to claim 1, characterized in that the indentation (12) of the table is U-shaped and in that the splicing bench (14) is essentially shaped as a rectangular frame three sides of which are formed by arms (15, 16, 17) following the inside of the U-shaped indentation, respectively, and the fourth side of which is formed of the rail (18) whereon the tools for connecting the cable members are susceptible to be translationally moved.

3. Device according to claim 2, characterized in that the interconnecting means comprise a cross-bar (25) extending transversely to the rail (18) and one end of which is affixed to the arm (16) of the bench which is parallel to the rail, the end of the cross-bar being mounted in an intermediate part (30) affixed to the table (1) substantially in the center of the leg of the U-shaped indentation which is parallel to the rail.

4. Device according to claims 2 or 3, wherein the splicing box is of cylindrical shape and has two lateral end faces comprising two flanges (37), respectively, which are interconnected by at least one metallic part forming a rod (42), characterized in that the rod (42) is fixedly mounted on a member forming a carrier (45) joining the arm (16) of the bench which is parallel to the rail, in such a manner that the box and the splicing bench form a rigid unit.

5. Device according to claim 4, characterized in that the carrier (45) comprises an opening (47) wherein the arm (16) of the bench which is parallel to the rails is loosely engaged, the carrier being susceptible to perform a sliding movement along said arm (16).

6. Device according to claims 4 or 5, characterized in that each flange (37) is formed of two half-shells which are interconnected and formed of a tight material.

7. Device according to claim 1, characterized in that the barrel (60) and the two collars (70) are of an elastomeric material and in that the splicing box further comprises a resilient sleeve (68) surrounding the barrel (60) in a manner to ensure a rigidification thereof.

8. Device according to any of claims 4 to 7, characterized in that the splicing box (35) further comprises lugs (78) for mounting the barrel (60) on the rod (42), these lugs joining two metallic rings (80) mounted on the barrel and interconnected by metallic rods (82) on each of which a metallic part (74) is intended to be secured for protecting the splice of the cable members as soon as terminated.

9. Device according to any of the preceding claims, characterized in that a connector is intended to be mounted at one end of each cable member (6) and in that the device further comprises two magazine members (50) mounted in annular manner on the two cable portions located outside of the splicing box (35), respectively, and each comprising tight lodgings (54) formed on their periphery and wherein the connectors once terminated are intended to be successively positioned.

10. Device according to claim 9, characterized in that each magazine (50) is formed of two identical parts adapted to be disconnected from each other, and in that each magazine comprises means for interlocking the two parts.

11. Device according to any of the preceding claims, characterized in that it further comprises two mechanic members in the form of cantilever arms (8) affixed to the table (1) and each comprising a suspension arm (9) provided with an opening (10) wherein the cable portion located outside of the splicing box (35) is intended to be engaged without play, thus ensuring a rigid maintenance of the two cables to be connected.

**Ansprüche**

1. Vorrichtung zur an einer Baustelle erfolgenden Verbindung von zwei Kabeln zur Übertragung über Lichtleiterfasern (4 ; 4′), die jeweils eine Mehrzahl von Kabelelementen (6) enthalten, wobei die Vorrichtung ein Spleißgehäuse (35) umfaßt, das dicht gemacht werden kann, zur Aufnahme der Kabelelemente nach Verbindung miteinander bestimmt ist und dessen zwei einander gegenüberliegende Seitenflächen zwei Öffnungen (40) aufweisen, in welche das eine bzw. andere der zwei miteinander zu verbindenen Kabel eingesetzt werden soll, dadurch gekennzeichnet, daß die Vorrichtung umfaßt :
— einen Tisch (1), der mit einer an seinem Umfang angebrachten, bogenförmigen Aussparung (12) versehen ist ;
— eine Spleißbank (14), die in der bogenförmigen Aussparung des Tisches positioniert ist und auf der das Gehäuse montiert ist, mit einer Schiene (18), die in ihrer Höhe verschiebbar und außerhalb des Bereichs des Gehäuses (35) angeordnet sowie diesem zugewandt ist und auf der Werkzeuge (20) zum Verbinden der Kabelelemente (6) angeordnet sind ;
— Mittel (25, 30) zur festen Verbindung der Bank (14) mit dem Tisch (1) in solcher Weise, daß die Bank und der Tisch eine starre Einheit bilden ;
und daß das Spleißgehäuse (35) innenseitig ein zylindrisches Teil enthält, welches eine Trommel (60) bildet, die ausgesparte Rillen (63) aufweist, welche sich über ihre gesamte Länge erstrecken und in denen jeweils eine bestimmte Länge jedes Kabelelementes (6) jedes Kabels aufgenommen werden soll, und zwei kranzförmige Teile (70) enthält, deren Außendruchmesser jeweils größer als der der Trommel ist, die ringförmig an dem einen bzw. anderen Ende der Trommel (60) angebracht und jeweils mit an ihrem Außenumfang verteilten Kerben (72) versehen sind, wobei der Verlegungsweg jedes Kabelementes eine gerade Linie im Inneren der Trommel bildet und jedes Kabelelement beim Verlassen der Trommel in eine Kerbe des Kranzes einzulegen ist, die dem unmittelbaren Austritt des Kabelementes am nächsten liegt, so daß die gerade Linie dieses Weges durch eine Schleife verlängert wird, die eine Überlänge bildet, die nach dem Durchgang durch einen der Kränze endet.

2. Vorrichtung nach Anspruch 1, dadurch gekennzeichnet, daß die Aussparung (12) des Tisches U-förmig ist und daß die Spleißbank (14) im wesentlichen die Form eines rechtwinkligen Rahmens aufweist, wovon drei Seiten durch Arme (15, 16, 17) gebildet sind, die innenseitig an die U-Form der Aussparung angeschmiegt sind, während die vierte Seite des Rahmens durch die Schiene (18) gebildet ist, auf der die Werkzeuge zum Verbinden der Kabelemente translationsverschiebbar angeordnet sind.

3. Vorrichtung nach Anspruch 2, dadurch gekennzeichnet, daß die Verbindungsmittel eine Strebe (25) enthalten, welche sich transversal zur Schiene (18) erstreckt und deren eines Ende an dem zur Schiene parallelen Arm (16) der Bank befestigt ist, während ihr anderes Ende in einem Zwischenteil (30) montiert ist, das an dem Tisch (1) im wesentlichen in der Mitte des zu der Schiene parallelen Schenkels der U-förmigen Aussparung befestigt ist.

4. Vorrichtung nach Anspruch 2 oder 3, bei welcher das Spleißgehäuse eine zylindrische Form aufweist, deren zwei seitliche Endlächen jeweils einen von zwei Flanschen (37) aufweisen, die untereinander durch wenigstens ein Metallteil verbunden sind, welches eine Stange (42) bildet, dadurch gekennzeichnet, daß die Stange (42) fest an einem Teil angebracht ist, das eine Stütze (45) bildet, welche mit dem zur Schiene parallelen Arm (16) der Bank verbunden ist, so daß das Gehäuse und die Spleißbank eine starre Einheit bilden.

5. Vorrichtung nach Anspruch 4, dadurch gekennzeichnet, daß die Stütze (45) eine Öffnung (47) aufweist, in die der zur Schiene parallele Arm (16) der Bank frei eingeführt ist, wobei die Stütze längs dieses Armes (16) verschiebbar ist.

6. Vorrichtung nach Anspruch 4 oder 5, dadurch gekennzeichnet, daß jeder Flansch (37) aus zwei Halbschalen gebildet ist, die miteinander verbunden und aus einem dichten Material gebildet sind.

7. Vorrichtung nach Anspruch 1, dadurch gekennzeichnet, daß die Trommel (60) und die beiden Kränze (70) aus einem Elastomermaterial gebildet sind und daß das Spleißgehäuse ferner eine elastische Hülse (68) aufweist, welche die Trommel (60) derart einhüllt, daß sie eine Versteifung derselben gewährleistet.

8. Vorrichtung nach einem der Ansprüche 4 bis 7, dadurch gekennzeichnet, daß das Spleißgehäuse (35) ferner Befestigungslaschen (78) zur Befestigung der Trommel (60) an der Stange (42) umfaßt, wobei diese Laschen mit zwei Metallringen (80) fest verbunden sind, welche an der Trommel angebracht und untereinander durch Metallstäbe (82) verbunden sind, an denen jeweils ein mechanisches Teil (74) zu befestigen ist, welches die Spleißstelle der Kabelemente nach Fertigstellung schützt.

9. Vorrichtung nach einem der vorstehenden Ansprüche, dadurch gekennzeichnet, daß ein Verbinder an einem Ende jedes Kabelementes (6) anzubringen ist und daß die Vorrichtung ferner zwei Magazinteile (50) enthält, die ringförmig auf denjenigen zwei Kabelteilen angeordnet sind, welche sich jeweils auf der Außenseite des Spleißgehäuses (35) befinden, und jeweils dichte Aufnahmeräume (54) umfassen, die an ihrem Umfang angebracht sind und in denen nacheinander die Verbinder, sobald sie montiert sind, positioniert werden sollen.

10. Vorrichtung nach Anspruch 9, dadurch gekennzeichnet, daß jedes Magazin (50) aus zwei voneinander lösbaren gleichen Teilen gebildet ist und daß jedes Magazin Mittel zum Verriegeln der beiden Teile miteinander umfaßt.

11. Vorrichtung nach einem der vorstehenden Ansprüche, dadurch gekennzeichnet, daß sie ferner zwei auslegerförmige mechanische Teile (8) umfaßt, die an dem Tisch (1) befestigt sind und jeweils einen Halterungsarm (9) aufweisen, der mit einer Öffnung (10) versehen ist, in welche derjenige Teil des Kabels spielfrei einzusetzen ist, der sich auf der Außenseite des Spleißgehäuses (35) befindet, um so einen starren Halt für die zu verbindenden zwei Kabel zu gewährleisten.